# FASCICULE DE BREVET EUROPEEN

(11) **EP 1 705 040 B1**
(45) Date de publication et mention de la délivrance du brevet: **20.10.2010**
(21) Numéro de dépôt: 06005135.6
(22) Date de dépôt: 14.03.2006
(51) Int. Cl.: B60H 1/00

(54) **Dispositif de chauffage-ventilation et/ou de climatisation de l'habitacle d'un véhicule**
Heizungs-, Belüftungs- und/oder Klimatisierungsvorrichtung für den Fahrzeuginnenraum
Heating, ventilation and/or air conditioning device for a vehicle interior

(30) Priorité: 22.03.2005 FR 0502850
(43) Date de publication de la demande: 27.09.2006
(73) Titulaire: Valeo Systèmes Thermiques, 78321 Le Mesnil St Denis Cedex (FR)
(72) Inventeur: Pouysegur, Serge, 78610 Le Perray en Yvelines (FR); Truillet, Franck, 28410 BU (FR); Droulez, Eric, 92150 Suresnes (FR)
(74) Mandataire: Léveillé, Christophe

(56) Documents cités:
- EP-A- 1 251 018
- DE-A1- 10 327 120
- DE-C1- 10 223 712
- FR-A- 2 772 682
- FR-A- 2 798 095
- US-A- 6 101 828
- US-A1- 2002 014 331

## Description

### DOMAINE TECHNIQUE DE L'INVENTION.

La présente invention concerne un dispositif de chauffage-ventilation et/ou de climatisation de l'habitacle d'un véhicule aisément adaptable à des véhicules de différentes tailles, tout en satisfaisant aux diverses contraintes ergonomiques du poste de conduite, notamment au niveau des pédales.

### ARRIERE PLAN TECHNOLOGIQUE DE L'INVENTION.

Les dispositifs de ce type sont généralement installés transversalement à l'avant du véhicule, sous le tableau de bord. Ils sont habituellement suspendus, au moins en partie, à un support solidement ancré à la carrosserie de manière à laisser un espace suffisant pour les pieds du conducteur et de son passager au-dessus du plancher de l'habitacle.

Outre les échangeurs thermiques (évaporateur, radiateur de chauffage), dont la taille est fonction du volume de l'habitacle et des conditions climatiques existant dans les pays auxquels le véhicule est destiné, les conduits de circulation et de distribution de l'air sont plus nombreux et plus complexes dans un véhicule de grande taille et de haut de gamme.

De ce fait un dispositif de chauffage/ ventilation/ climatisation convenant par exemple à un grand véhicule de type "monospace" ou "break", ne pourra pas être installé dans une berline compacte, ou dans un coupé, parce que les cotes de son boîtier interfèrent avec les zones d'ergonomie des pieds, par exemple.

Une manière de réduire la hauteur d'un tel dispositif est divulguée dans la demande de brevet français FR2772682**.** Elle consiste à remplacer le simple renfort métallique que constitue généralement le support du dispositif par une poutre transversale creuse, les évidements de celle-ci réalisant, en les déportant vers le haut, au moins en partie, les fonctions de circulation et de distribution d'air, dévolues jusqu'alors à des conduits situés dans le boîtier du dispositif ou hors de renfort métallique.

L'intégration d'une partie des conduits d'air dans la poutre porteuse ayant libéré une partie de l'espace intérieur du boîtier, l'encombrement du dispositif est alors principalement déterminé par la taille des échangeurs thermiques.

Par ailleurs, le brevet US6101828 propose de ménager un espace suffisant pour les pieds en dessous du dispositif en agençant dans le boîtier des échangeurs nettement plus larges que hauts, en position inclinée d'avant en arrière, transversale par rapport au véhicule quand le dispositif y est installé.

La structure du dispositif de climatisation adoptée dans le brevet US6101828 conduit aussi à une réduction de la hauteur totale de l'appareil, mais il n'est pas évident que cette réduction soit suffisante pour permettre l'installation sans difficulté dans un véhicule de petite taille d'un dispositif standard convenant aux besoins thermiques d'un grand véhicule.

Le problème de la conception d'un appareil de climatisation modulaire dont les échangeurs sont adaptés à différents types d'automobiles a été posé dans le brevet allemand DE10223712 ou la demande de brevet allemand DE10327210. La solution proposée consiste à associer à une installation de base des échangeurs de tailles variables constitués par la juxtaposition d'un nombre variable d'unités identiques, selon les besoins thermiques d'un véhicule particulier.

Cependant le mode de réalisation décrit ne semble adapté qu'à des véhicules utilitaires, notamment des autocars ou autobus, car les modules unitaires des échangeurs reliés entre eux forment de grands panneaux qu'il ne semble guère possible de disposer ailleurs que dans le toit.

Des dispositifs de chauffage-ventilation et/ ou de climatisation de hauteur réduite, ou des appareils de climatisation modulaires en fonction des besoins thermiques de véhicules de différents types sont donc connus de l'état de la technique.

Mais aucun dispositif connu ne présente des échangeurs ayant une capacité thermique modulable dans le but d'optimiser leur encombrement en fonction des besoins thermiques de l'habitacle nécessaires, et donc de rendre ce dispositif utilisable dans des véhicules de différentes tailles.

### DESCRIPTION GENERALE DE L'INVENTION.

La présente invention vise donc à réaliser un dispositif de chauffage-ventilation et/ ou de climatisation de l'habitacle d'un véhicule quelconque d'une gamme de modèles d'automobiles basé sur la modularité des échangeurs thermiques.

Le dispositif dont il s'agit est du type de ceux comportant des conduites de circulation et de distribution d'air, et un support supérieur, de forme allongée, qui est destiné à être fixé transversalement et horizontalement dans l'habitacle, et qui supporte un boîtier inférieur.

Ce boîtier présente une partie avant et une partie arrière, destinées, respectivement, à être orientées vers l'avant et vers l'arrière du véhicule, et il comporte intérieurement au moins un échangeur thermique.

Ce dernier est sensiblement de la forme d'un parallélépipède rectangle s'étendant dans un plan incliné sur l'horizontale, en largeur selon une direction sensiblement parallèle à l'axe longitudinal du support, et en hauteur selon une direction sensiblement perpendiculaire à cet axe.

La présente invention a précisément pour objet un dispositif de chauffage-ventilation et/ ou climatisation de ce type, remarquable en ce que l'échangeur thermique qu'il comporte présente:
- d'une part, une largeur prédéterminée et une inclinaison prédéterminée par rapport à l'horizontale constantes d'un modèle à un autre de la gamme et spécifiques à cette gamme;
- d'autre part, une hauteur variable, spécifique d'un véhicule particulier de la gamme.

Cette hauteur variable est toutefois comprise entre une hauteur minimale et une hauteur maximale prédéterminées, elles aussi spécifiques de la gamme de modèles.

Une autre caractéristique essentielle du dispositif de chauffage-ventilation et/ou de climatisation de l'habitacle d'un véhicule selon l'invention est que le boîtier inférieur du dispositif comprend au moins un capot porteur présentant: d'une part, un élément de base solidaire du support supérieur et recouvrant l'échangeur thermique dans le sens de la hauteur sur une distance de recouvrement prédéterminée au moins égale à la moitié de la hauteur minimale prédéterminée propre à la gamme de modèles; - d'autre part, un couvercle assemblé avec cet élément de base le long d'une surface de liaison, coopérant avec le bord extérieur de l'échangeur et recouvrant celui-ci dans le sens de la hauteur sur une distance égale à la différence entre la hauteur variable et la distance de recouvrement.

De la sorte, à l'intérieur d'une même gamme de modèles, un échangeur thermique occupe la même position générale à l'intérieur d'un élément de base standard du boîtier pour cette gamme, tandis que sa hauteur varie d'un modèle à un autre afin de satisfaire à des besoins thermiques spécifiques.

La partie de surface variable de cet échangeur, qui s'étend en dehors de l'élément de base standard, est alors recouverte par un couvercle adapté de taille variable.

Afin de diminuer l'encombrement du dispositif de chauffage-ventilation et/ ou de climatisation de l'habitacle d'un véhicule selon l'invention, le support du boîtier est avantageusement une poutre creuse définissant, au moins en partie, les conduites destinée à conduire l'air provenant du boîtier vers au moins une zone de l'habitacle.

Alternativement, ou simultanément, cette poutre creuse comprend au moins un volet destiné à distribuer l'air dans l'habitacle.

De préférence, l'échangeur dont il s'agit est un évaporateur agencé sensiblement dans la partie avant du boîtier. L'inclinaison de l'évaporateur est mesurée par l'angle formé par le plan incliné dans lequel il s'étend et le plan horizontal passant par son bord avant. Comptée dans le sens conventionnel, c'est-à-dire dans le sens inverse des aiguilles d'une montre, cette inclinaison est positive.

De préférence, le dispositif selon l'invention comporte de plus un filtre, associé à l'évaporateur, dont le bord avant est supporté par le même couvercle.

On tire bénéfice du fait que ce couvercle comporte de plus un dispositif d'évacuation des condensats.

Alternativement ou simultanément, l'échangeur dont il s'agit est un radiateur de chauffage agencé sensiblement dans la partie arrière du boîtier, et son inclinaison, comptée dans le sens conventionnel, est négative ou nulle.

Fort avantageusement, le couvercle du radiateur de chauffage comporte alternativement soit une fermeture étanche, soit des buses de distribution d'air dont l'encombrement latéral est de préférence sensiblement compris entre la largeur prédéterminée de l'échangeur et le 1/3 de cette valeur.

Ces quelques spécifications essentielles auront rendu évidents pour l'homme de métier les avantages apportés par le dispositif selon l'invention par rapport à l'état-de la technique antérieur.

La structure modulaire du dispositif selon l'invention a notamment l'avantage de diminuer les coûts de fabrication en réduisant la diversité des outillages. Les éléments les plus complexes du boîtier sont identiques pour tous les dispositifs équipant une même gamme de véhicules; seules changent des pièces rapportées de moindre coût, c'est-à-dire le ou les capots ou couvercles.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est une vue schématique du boîtier du dispositif de chauffage-ventilation et/ ou de climatisation de l'habitacle d'un véhicule selon l'invention.
La **Figure 2** est une coupe longitudinale d'un dispositif exécuté selon un mode de réalisation préféré de l'invention, en situation dans un habitacle.
Les **Figures 3** **et** **4** sont les coupes longitudinales d'exemples de réalisation de dispositifs selon l'invention, en situation, respectivement, dans un habitacle d'un véhicule de bas de gamme et d'un véhicule de haut de gamme.

### DESCRIPTION DES MODES DE REALISATION PREFERES DE L'INVENTION.

Ces modes de réalisation préférés concernent des dispositifs de chauffage-ventilation et de climatisation, désignés globalement sous l'acronyme anglais de HVAC (Heating, Ventilating, Air Conditionning), destinés à des véhicules de tourisme.

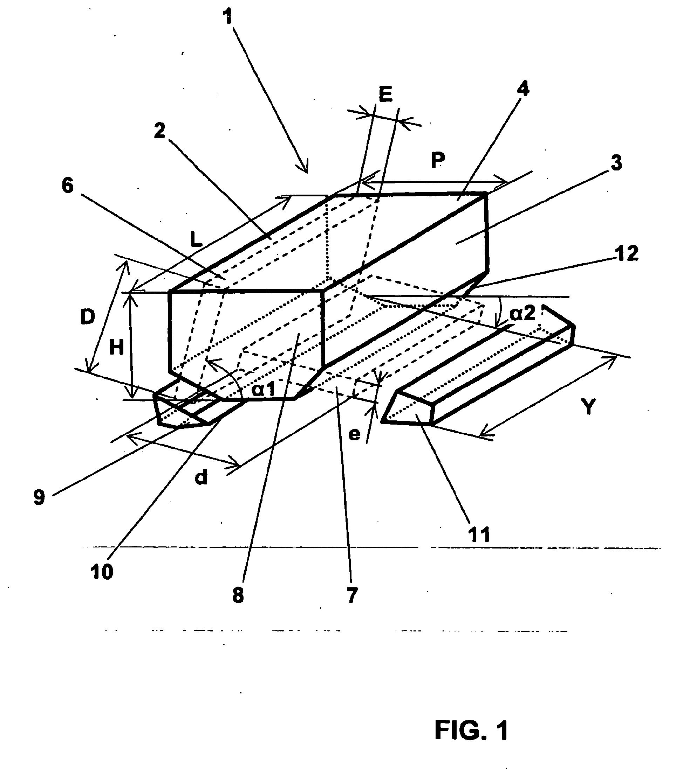

Le principe de fonctionnement et l'architecture fonctionnelle de ces appareils sont bien connus, de sorte que ne seront décrits ici en détail que les boîtiers 1 de l'HVAC modulaires selon l'invention représentés schématiquement sur la **Figure 1****.**

La forme générale de ces boîtiers 1 est celle d'un parallélépipède rectangle de largeur L, de profondeur P et de hauteur H. Ils sont installés transversalement à l'avant des habitacles des véhicules, sensiblement centré dans le plan de symétrie longitudinal de ceux-ci. Un boîtier 1 présente donc notamment une face avant 2 orientée vers l'avant du véhicule, une face arrière 3 orientée vers l'arrière du véhicule, et une face supérieure 4.

Le boîtier 1 est généralement suspendu par sa face supérieure 4 à un support 5 s'étendant transversalement dans l'habitacle et solidement fixé à la carrosserie. En variante, le boîtier 1 est également partiellement fixé sur sa face arrière 3.

A l'intérieur des conduits de circulation d'air du boîtier 1 prennent place, supportés par un capot porteur de manière connue en soi, l'évaporateur 6 du circuit de réfrigération, et le radiateur de chauffage 7 en dérivation sur le circuit de refroidissement du moteur.

L'évaporateur 6 est de la forme générale d'un parallélépipède rectangle, par exemple plus large que haut, et installé transversalement à l'avant du boîtier 1.

L'épaisseur E de l'évaporateur 6, c'est-à-dire la dimension des plaques ou tubes de l'échangeur thermique dans la direction de circulation de l'air est faible relativement à la hauteur et à la largeur. Cette épaisseur est standardisée, et est comprise entre 35 mm et 75 mm.

Selon la capacité d'échange thermique nécessaire à chaque habitacle, la surface de l'évaporateur 6 doit varier, un grand véhicule nécessitant un évaporateur 6 de surface plus grande qu'un véhicule de petite taille.

Faire varier simultanément la largeur et la hauteur de l'évaporateur 6, pour une surface donnée, en respectant les contraintes ergonomiques de l'habitacle, notamment au niveau de l'emplacement des pédales, conduirait à la mise en production de boîtiers de dimensions et de formes très diverses, dont les coûts de fabrication ne pourraient bénéficier des économies d'échelle.

Selon le principe de l'invention, la diversité des boîtiers 1 est réduite, à l'intérieur d'une même gamme de véhicules, en gardant la largeur des évaporateurs 6 constante et égale à une valeur prédéterminée correspondant aux besoins thermiques du véhicule le plus grand, et en modulant la hauteur D des évaporateurs 6 en fonction des besoins des autres modèles de la gamme.

Les contraintes dimensionnelles au niveau des pieds sont respectées sur toute une gamme de modèles grâce à un choix judicieux de l'angle d'inclinaison α1 de l'évaporateur 6.

Cet angle α1 est un angle prédéterminé constant pour une même gamme, de sorte qu'un élément de base 8 du capot porteur, muni par exemple de glissières latérales, est apte à recevoir sans modification des évaporateurs 6 de hauteur D variable, comprise entre une hauteur minimale et une hauteur maximale spécifiques à cette gamme.

L'évaporateur 6 étant maintenu latéralement par l'élément de base 8 du capot, sa largeur utile est sensiblement égale à la largeur L du boîtier 1.

La partie de l'évaporateur 6 dépassant de l'élément de base 8 est supportée et protégée par un couvercle 9 de hauteur variable. Ce couvercle peut également supporter la fonction l'évacuation des condensats.

Ce couvercle 9 est donc la seule pièce à changer d'un véhicule à un autre d'une même gamme. C'est une pièce de moindre coût, assemblée bord à bord de manière conventionnelle avec l'élément de base 8 le long d'une surface de liaison 10.

Le bord extérieur de l'évaporateur 6 est en contact avec le fond du couvercle 10, et l'autre bord est en contact avec la face supérieure 4 du boîtier 1 de sorte que l'encombrement de haut en bas du boîtier 1, dans le plan de l'évaporateur 6, est peu différent de la hauteur D de l'évaporateur 6.

Fort avantageusement, la largeur prédéterminée L de cet évaporateur 6, pour l'ensemble des gammes de modèles d'automobiles considérés, est comprise entre 190 mm et 350 mm, et l'angle d'inclinaison prédéterminé α1 est compris entre 45° et 90°; la hauteur minimale de l'évaporateur 6 est de préférence au moins égale à 200 mm et sa hauteur maximale est de préférence au plus égale à 275 mm.

De même que l'évaporateur 6, le radiateur de chauffage 7 est de la forme générale d'un parallélépipède rectangle, par exemple plus large que haut. Il est installé transversalement à l'arrière du boîtier 1.

L'épaisseur e du radiateur 7, c'est-à-dire la dimension des plaques de l'échangeur thermique dans la direction de circulation de l'air est aussi faible, relativement à la hauteur et à la largeur. Cette épaisseur est aussi standardisée, et de l'ordre de 20 mm à 45 mm.

La conception modulaire du radiateur 7 et l'installation de celui-ci dans le boîtier 1 sont similaires à celles de l'évaporateur 6.

Sa largeur utilise au mieux toute la largeur du boîtier L déterminée précédemment par les besoins thermiques du véhicule le plus grand de la gamme. Sa hauteur d est variable pour un modèle quelconque de la gamme entre une hauteur minimale et une hauteur maximale spécifiques à la gamme.

De même que l'évaporateur 6, le radiateur de chauffage est incliné sur l'horizontale. Le meilleur compromis pour conserver un angle d'inclinaison α2 constant pour tous les modèles d'une même gamme, et ainsi réduire la diversité des éléments des capots porteurs nécessaires, a été de choisir un angle d'inclinaison α2 positif, nul ou négatif, c'est-à-dire que le bord arrière du radiateur 7 est plus bas que le bord avant.

L'évaporateur 6 occupant toute la section de la partie avant du boîtier 1, la position du bord antérieur du radiateur 7 est limitée vers l'avant par la surface de l'évaporateur 6, et la profondeur P du boîtier est nécessairement supérieure à la hauteur d du radiateur. Toutefois la modularité permet de n'utiliser qu'une surface de faisceau de l'échangeur correspondant strictement aux besoins thermiques du véhicule. Un couvercle 11 adapté à la partie de radiateur 7 dépassant de l'élément de base 8 du capot, et assemblé bord à bord 12 avec celui-ci, conduit alors à une centrale thermique d'encombrement longitudinal minimum. On entend par centrale thermique un boîtier susceptible de produire l'air à une température désirée dans l'habitacle. Sans une variante avantageuse de l'invention, cette centrale thermique ne comprend donc pas de moyens de distribution de l'air car ceux-ci sont disposés dans le support 5 autrement appelé poutre aéraulique. Ces moyens de distribution comprennent des conduits dédiés à des zones spécifiques de l'habitacle telles que dégivrage, pieds avant ou ventilation et des volets destinés à contrôler le flux d'air à envoyer vers ces conduits.

Fort avantageusement, pour l'ensemble des gammes de modèles, l'angle d'inclinaison prédéterminé α2 est compris entre 0° et - 45°; la hauteur minimale du radiateur de chauffage 7 est de préférence au moins égale à 140 mm et sa hauteur maximale est de préférence au plus égale à 250 mm.

Cependant, dans d'autres variantes de réalisation, pour les besoins d'une gamme de particulière de modèles, l'inclinaison α2 du radiateur 7 est avantageusement positive.

Sur les véhicules de grande taille ou de haut de gamme, il est prévu une distribution de l'air vers l'arrière. Dans ce cas, le couvercle 11 du radiateur 7 comporte des buses de distribution 13 d'air vers l'arrière dont l'écartement maximal Y, ou l'encombrement latéral, est au plus égal à la largeur du boîtier L et au moins égal au 1/3 de cette valeur. L'encombrement longitudinal supplémentaire des buses de distribution pour les zones arrière est par exemple de 100 mm.

Dans tous les modes préférés de réalisation, le boîtier 1 du dispositif de chauffage-ventilation et/ ou de climatisation de l'habitacle d'un véhicule selon l'invention présente de préférence une largeur L sensiblement comprise entre 190 mm et 350 mm, une hauteur H sensiblement comprise entre 130 mm et 300 mm, et une profondeur P sensiblement comprise entre 170 mm et 490 mm.

L'ensemble des paramètres dimensionnels déterminant la modularité du dispositif selon l'invention est résumé dans la Table 1 suivante:

**Table 1**

| | Largeur boîtier L | Hauteur boîtier H | Profondeur boîtier P | Hauteur D évaporateur | Hauteur d radiateur | Ecartement buses Y |
|---|---|---|---|---|---|---|
| min | 190 mm | 130 mm | 170 mm | 200 mm | 140 mm | 1/3 L |
| max | 350 mm | 300 mm | 490 mm | 275 mm | 250 mm | L |

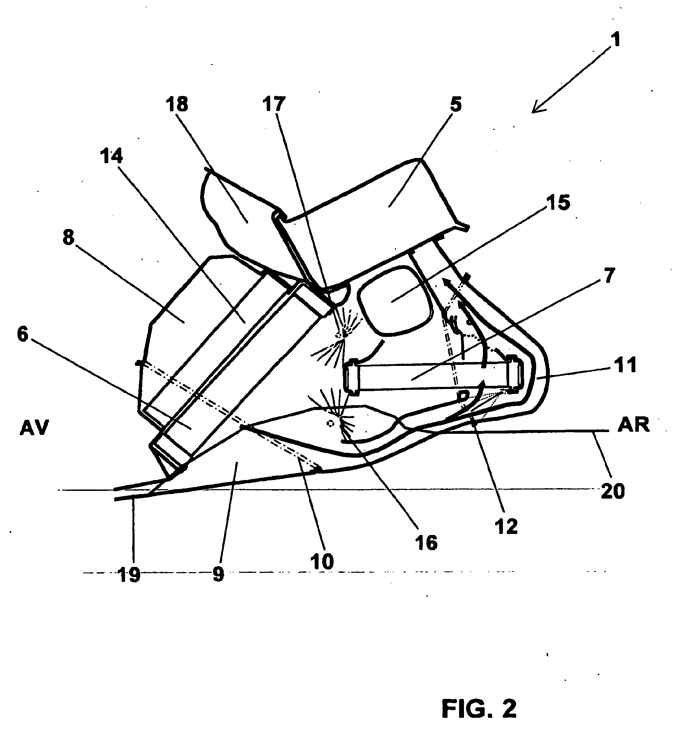

Les **Figures 2****,** **3** **et** **4** montrent, en coupe selon le plan de symétrie longitudinale des véhicules dans lesquels ils sont installés, des exemples concrets de réalisation de centrales thermiques modulaires selon l'invention (l'avant AV du véhicule est situé à gauche des figures, l'arrière AR à droite).

Le boîtier 1 de la centrale est représenté suspendu à son support 5, qui est ici une poutre aéraulique contenant une partie des circuits de distribution d'air. Il contient l'évaporateur 6 associé à un filtre 14 et le radiateur de chauffage 7. Une bouche de sortie d'air 15 pour la zone de pieds avant, les volets de mélange d'air chaud 16 et froid 17, et le boîtier de distribution secondaire 18 pour la zone de dégivrage et/ou pour la diffusion douce sont également représentés.

La **Figure 2** montre bien l'évaporateur 6, incliné à environ 45° sur l'horizontale, maintenu au niveau de son bord supérieur en haut de l'élément de base 8 du capot, et au niveau de son bord inférieur par le couvercle avant 9. Ce couvercle possède une goulotte 19 d'évacuation des condensats orientée ici, par exemple, vers l'avant AV. Cette goulotte 19 peut être, alternativement, orientée vers le bas ou vers l'arrière du véhicule.

Le radiateur 7 est pratiquement horizontal. Son bord antérieur est maintenu dans le boîtier au niveau des volets mélangeurs d'air chaud 16 et froid 17 et son bord postérieur est maintenu par le couvercle arrière étanche 11.

Les couvercles avant 9 et arrière 11 sont chacun assemblés bord à bord avec l'élément de base 8 du capot de manière rigide et étanche. Pour ce faire, les bords 10, 12 des couvercles 9, 11 et de l'élément de base 8 présentent chacun un profil adéquat. De préférence, la surface de liaison entre les parties modulaires 9, 11 du capot et de la base 8 est constituée par la surface de contact entre une lèvre en U de l'un des bords et une lèvre en L de l'autre bord.

Le couvercle arrière 11 du dispositif représenté sur la **Figure 2** est protubérant, recouvrant un radiateur de chauffage 7 de grande surface, mais ne comporte pas de buses de distribution 13 d'air vers l'arrière. Il correspond donc à un véhicule de grande taille, pour lequel les besoins thermiques sont importants, mais de moindre gamme, dans lequel aucun élément de confort dédié n'est prévu pour les passagers aux places arrière.

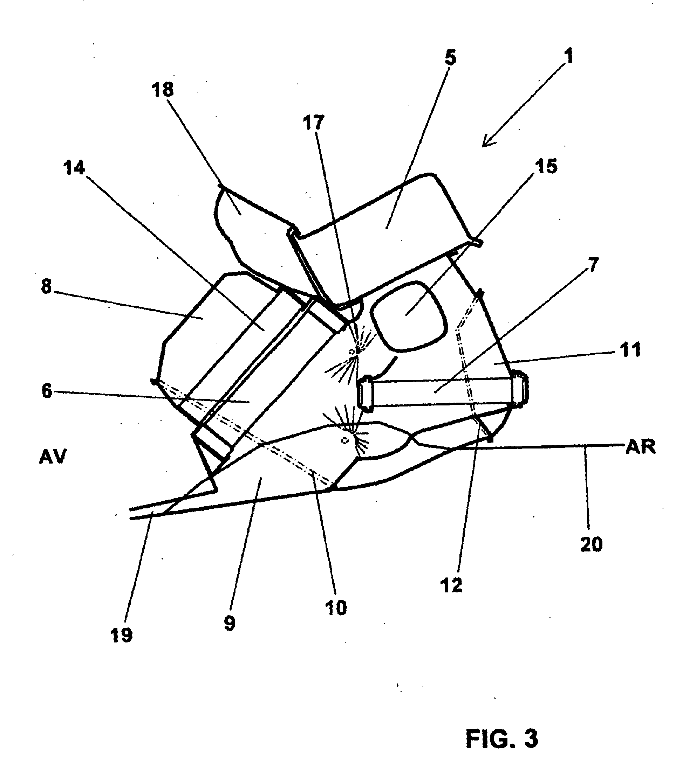

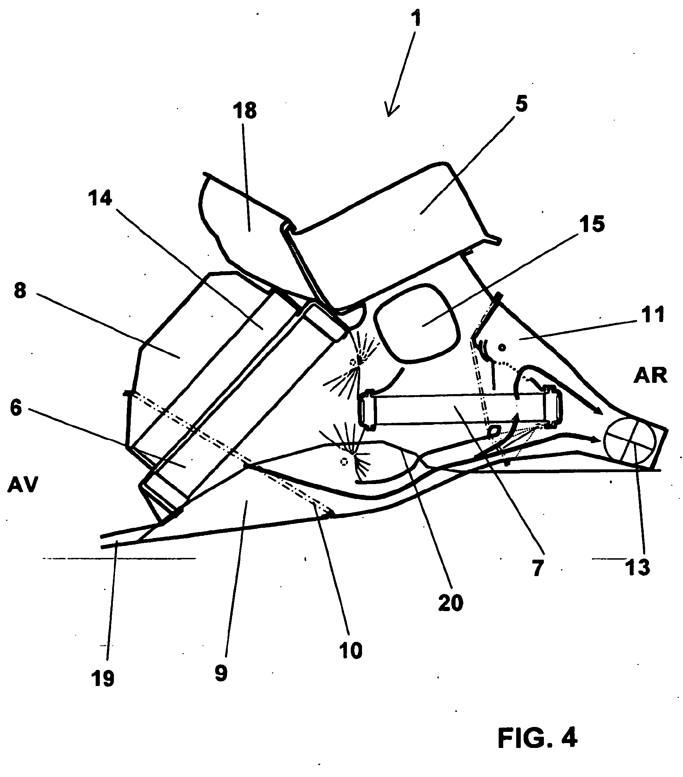

Dans d'autres variantes, les **Figures 3** **et** **4** montrent des dispositifs selon l'invention où le radiateur 7 est, respectivement, de surface minimale, correspondant à un véhicule de petite taille, et de taille maximale, pour un véhicule de grande taille. La **Figure 3** correspond à un modèle de bas de gamme, le couvercle arrière 11 étant un simple cache, tandis que la **Figure 4** correspond à un modèle de haut de gamme, le couvercle 11 présentant des buses de distribution 13 de l'air à l'arrière de l'habitacle.

Quelles que soient les pièces spécifiques 9, 11, 13, 18 rapportées à l'élément de base 8 du capot, la structure modulaire et compacte de la centrale thermique selon l'invention permet de conserver un espace suffisant entre ladite et centrale et le plancher de l'habitacle. On comprend donc que les échangeurs 6 et 7, déterminants pour la largeur de la centrale thermique, n'interfèrent pas avec une limite référencée 20 qui illustre la zone conventionnelle d'ergonomie des pieds. Ainsi, en dessous de cette limite, l'encombrement latéral de la centrale thermique peut être réduit car c'est une partie de la centrale qui ne comporte pas d'échangeur thermique de sorte à dégager de la place pour les pieds des occupants du véhicule en réduisant la largeur des boîtiers spécifiquement dans cette zone.

Comme il va de soi l'invention ne se limite pas aux seuls modes d'exécution préférentiels décrits ci-dessus.

Elle embrasse au contraire toutes les variantes possibles de réalisation.

Notamment le nombre et le type des échangeurs thermiques 6,7, précisés dans la description, ne sont aucunement limitatifs.

La mise en oeuvre d'un seul échangeur thermique-constitué par un radiateur, ou au contraire d'éléments de chauffage additionnels, ne sortirait pas du cadre de la présente invention dans la mesure où l'agencement de ces échangeurs résulte des revendications ci-après.

## Revendications

1. Dispositif de chauffage-ventilation et/ou de climatisation de l'habitacle d'un véhicule quelconque d'une gamme de modèles d'automobiles, ledit dispositif étant du type de ceux comportant des conduites de circulation et de distribution d'air et un boîtier inférieur (1) présentant une partie avant (2) et une partie arrière (3), destinées, respectivement, à être orientées vers l'avant et vers l'arrière dudit véhicule, ledit bottier (1) comportant intérieurement au moins un échangeur thermique (6,7), ledit échangeur (6,7) présente, d'une part, une largeur prédéterminée et une inclinaison (α1,α2) prédéterminée par rapport à l'horizontale constantes et spécifiques de ladite gamme, et, d'autre part, une hauteur variable (D, d), spécifique d'un véhicule particulier, comprise entre une hauteur minimale et une hauteur maximale prédéterminées spécifiques de ladite gamme, **caractérisé en ce que** ledit boîtier (1) comprend au moins un capot porteur (8,9,11) présentant, d'une part, un élément de base (8) recouvrant ledit échangeur (6,7) dans le sens de la hauteur sur une distance de recouvrement prédéterminée au moins égale à la moitié de ladite hauteur minimale, et, d'autre part, un couvercle (9,11) assemblé avec ledit élément (8) le long d'une surface de liaison (10,11), coopérant avec le bord extérieur dudit échangeur (6,7) et recouvrant ledit échangeur (6,7) dans le sens de la hauteur sur une distance égale à la différence entre ladite hauteur variable (D,d) et ladite distance de recouvrement.

2. Dispositif de chauffage-ventilation et/ ou de climatisation de l'habitacle d'un véhicule selon la revendication 1, **caractérisé en ce qu'**il comprend un support supérieur (5), de forme allongée, destiné à être fixé transversalement dans ledit habitacle.

3. Dispositif de chauffage-ventilation et/ ou de climatisation de l'habitacle d'un véhicule selon la revendication 2, **caractérisé en ce que** l'élément de base (8) est solidaire dudit support (5).

4. Dispositif de chauffage-ventilation et/ ou de climatisation de l'habitacle d'un véhicule selon l'une quelconque des revendications 2 ou 3, **caractérisé en ce que** ledit support (5) est une poutre creuse définissant en partie lesdites conduites et destinée à conduire l'air provenant dudit boîtier (1) vers au moins une zone dudit habitacle.

5. Dispositif de chauffage-ventilation et/ ou de climatisation de l'habitacle d'un véhicule selon l'une quelconque des revendications 2 ou 4, **caractérisé en ce que** ledit support (5) est une poutre creuse définissant en partie lesdites conduites et comprenant au moins un volet destiné à contrôler la distribution de l'air dans l'habitacle.

6. Dispositif de chauffage-ventilation et/ ou de climatisation de l'habitacle d'un véhicule selon l'une quelconque des revendications 1 à 5, **caractérisé en ce que** ledit échangeur (6,7) est un évaporateur (6) agencé sensiblement dans ladite partie avant (2) dudit boîtier (1) et dont l'inclinaison (α1), mesurée par l'angle formé par ledit plan incliné et le plan horizontal passant par le bord avant dudit évaporateur (6) et comptée dans le sens conventionnel, est positive.

7. Dispositif de chauffage-ventilation et/ ou de climatisation de l'habitacle d'un véhicule selon la revendication 6, **caractérisé en ce qu'**il comporte de plus, associé audit évaporateur (6), un filtre (14), dont le bord avant est supporté par ledit couvercle (9).

8. Dispositif de chauffage-ventilation et/ ou de climatisation de l'habitacle d'un véhicule selon l'une quelconque des revendications 1 à 7, **caractérisé en ce que** ledit couvercle (9) comporte de plus un dispositif d'évacuation des condensats (19).

9. Dispositif de chauffage-ventilation et/ ou de climatisation de l'habitacle d'un véhicule selon l'une quelconque des revendications 6 à 8 précédentes, **caractérisé en ce que** ledit échangeur est sensiblement de la forme d'un parallélépipède rectangle s'étendant dans un plan incliné sur l'horizontale, en largueur selon une direction sensiblement parallèle à l'axe longitudinal dudit support (1), et en hauteur selon une direction sensiblement perpendiculaire audit axe longitudinal, ladite largeur prédéterminée est comprise entre 190 mm et 350 mm et ladite inclinaison (α1) est comprise entre 40 deg. et 90 deg. , et **en ce que** ladite hauteur minimale est de préférence au moins égale à 200 mm et ladite hauteur maximale est de préférence au plus égale à 275 mm.

10. Dispositif de chauffage-ventilation et/ ou de climatisation de l'habitacle d'un véhicule l'une quelconque des revendications 2 à 5, **caractérisé en ce que** ledit échangeur (6, 7) est un radiateur de chauffage (7) agencé sensiblement dans ladite partie arrière (3) dudit boîtier et dont ladite inclinaison (α2), mesurée par l'angle formé par ledit plan incliné et le plan horizontal passant par le bord avant dudit radiateur (7) et comptée dans le sens conventionnel, est négative ou nulle.

11. Dispositif de chauffage-ventilation et/ ou de climatisation de l'habitacle d'un véhicule selon la revendication 10, **caractérisé en ce que** ladite largeur prédéterminée est comprise entre 190 mm et 350 mm et ledit angle d'inclinaison (α2) est compris entre 0 deg. et - 45 deg. et **en ce que** ladite hauteur minimale est de préférence au moins égale à 140 mm et ladite hauteur maximale est de préférence au plus égale à 250 mm.

12. Dispositif de chauffage-ventilation et/ ou de climatisation de l'habitacle d'un véhicule selon l'une quelconque des revendications 1 à 11, **caractérisé en ce que** ledit couvercle (11) comporte alternativement soit une fermeture étanche, soit des buses de distribution d'air (13) dont l'encombrement latéral Y est de préférence sensiblement compris entre ladite largeur prédéterminée et le 1/3 de cette valeur.

13. Dispositif de chauffage-ventilation et/ ou de climatisation de l'habitacle d'un véhicule selon l'une quelconque des revendications 1 à 12, **caractérisé en ce que** ledit boîtier (1) présente de préférence une largeur L sensiblement comprise entre 190 mm et 350 mm, une hauteur H sensiblement comprise entre 130 mm et 300 mm, et une profondeur P d'avant en arrière sensiblement comprise entre 170 mm et 490 mm.

## Claims

1. Heating/ventilating and/or air conditioning device for the cabin of any vehicle of a range of automobile models, said device being of the type of those comprising ducts for the circulation and distribution of air and a lower casing (1) having a front portion (2) and a rear portion (3), intended, respectively, to be oriented towards the front and towards the rear of said vehicle, said casing (1) comprising interiorly at least one heat exchanger (6, 7), said exchanger (6, 7) has, on the one hand, a predetermined width and a predetermined inclination (α1, α2) in relation to the horizontal constant and specific of said range, and, on the other hand, a specific variable height (D, d), of a particular vehicle, between a specific predetermined minimum height and a maximum height of said range, **characterised in that** said casing (1) comprises at least one carrier hood (8, 9, 11) having, on the one hand, a base element (8) covering said exchanger (6, 7) in the direction of the height over a predetermined covering distance at least equal to half of said minimum height, and, on the other hand, a lid (9, 11) assembled with said element (8) along a connecting surface (10, 11), cooperating with the exterior edge of said exchanger (6, 7) and covering said exchanger (6, 7) in the direction of the height over a distance equal to the difference between said variable height (D, d) and said distance of covering.

2. Heating/ventilating and/or air conditioning device for the cabin of a vehicle according to claim 1, **characterised in that** it comprises an upper support (5), of extended form, intended to be fixed transversally in said cabin.

3. Heating/ventilating and/or air conditioning device for the cabin of a vehicle according to claim 2, **characterised in that** the base element (8) is integral with said support (5).

4. Heating/ventilating and/or air conditioning device for the cabin of a vehicle according to any of claims 2 or 3, **characterised in that** said support (5) is a hollow beam defining partially said ducts and intended to conduct the air coming from said casing (1) towards at least one zone of said cabin.

5. Heating/ventilating and/or air conditioning device for the cabin of a vehicle according to any of claims 2 or 4, **characterised in that** said support (5) is a hollow beam defining partially said ducts and comprising at least one flap intended to control the distribution of the air in the cabin.

6. Heating/ventilating and/or air conditioning device for the cabin of a vehicle according to any of claims 1 to 5, **characterised in that** said exchanger (6, 7) is an evaporator (6) arranged substantially in said front portion (2) of said casing (1) and of which the inclination (α1), measured by the angle formed by said inclined plane and the horizontal plane passing through the front edge of said evaporator (6) and counted in the conventional direction, is positive.

7. Heating/ventilating and/or air conditioning device for the cabin of a vehicle according to claim 6, **characterised in that** it comprises in addition, associated to said evaporated (6), a filter (14), of which the front edge is supported by said lid (9).

8. Heating/ventilating and/or air conditioning device for the cabin of a vehicle according to any of claims 1 to 7, **characterised in that** said lid (9) comprises in addition a device for evacuating condensates (19).

9. Heating/ventilating and/or air conditioning device for the cabin of a vehicle according to any of preceding claims 6 to 8, **characterised in that** said exchanger is substantially in the form of a rectangle parallelepiped extending in an inclined plane on the horizontal, in width according to a direction substantially parallel to the longitudinal axis of said support (1), and in height according to a direction substantially perpendicular to the longitudinal axis, said predetermined width is between 190 mm and 350 mm and said inclination (α1) is between 40 deg. and 90 deg., and **in that** said minimum height is more preferably at least equal to 200 mm and said maximum height is more preferably at most equal to 275 mm.

10. Heating/ventilating and/or air conditioning device for the cabin of a vehicle according to any of claims 2 to 5, **characterised in that** said exchanger (6, 7) is a heating radiator (7) arranged substantially in said rear portion (3) of said casing and of which said inclination (α2), measured by the angle formed by said inclined plane and the horizontal plane passing through the front edge of said radiator (7) and counted in the conventional direction, is negative or zero.

11. Heating/ventilating and/or air conditioning device for the cabin of a vehicle according to claim 10, **characterised in that** said predetermined width is between 190 mm and 350 mm and said angle of inclination (α2) is between 0 deg. and - 45 deg. and **in that** said minimum height is more preferably at least equal to 140 mm and said maximum height is more preferably at most equal to 250 mm.

12. Heating/ventilating and/or air conditioning device for the cabin of a vehicle according to any of claims 1 to 11, **characterised in that** said lid (11) comprises alternatively either a sealed closing, or air distribution nozzles (13) of which the lateral encumbrance Y is more preferably substantially between said predetermined width and 1/3 of this value.

13. Heating/ventilating and/or air conditioning device for the cabin of a vehicle according to any of claims 1 to 12, **characterised in that** said casing (1) has more preferably a width L substantially between 190 mm and 350 mm, a height H substantially between 130 mm and 300 mm, and a depth P form the front to the rear substantially between 170 mm and 490 mm.

## Patentansprüche

1. Vorrichtung zur Heizung, Lüftung und/oder Klimatisierung des Fahrgastraums eines beliebigen Fahrzeugs einer Kraftfahrzeug-Modellreihe, wobei die Vorrichtung von der Art ist, die Leitungen zum Zirkulieren und Verteilen von Luft und ein unteres Gehäuse (1), das einen vorderen Teil (2) und einen hinteren Teil (3) aufweist, die jeweils dazu gedacht sind, zum vorderen Teil und zum hinteren Teil des Fahrzeugs hin orientiert zu werden, umfasst, wobei das Gehäuse (1) im Innern mindestens einen Wärmeaustauscher (6, 7) umfasst, wobei der Wärmeaustauscher (6, 7) einerseits eine vorherbestimmte Breite und eine vorherbestimmte Neigung (α1, α2) im Verhältnis zur Waagerechten, die konstant und für die Modellreihe spezifisch sind, und andererseits eine variable Höhe (D, d), die für ein bestimmtes Fahrzeug spezifisch ist und zwischen einer vorherbestimmten minimalen Höhe und einer vorherbestimmten maximalen Höhe liegt, die für die Modellreihe spezifisch sind, aufweist, **dadurch gekennzeichnet, dass** das Gehäuse (1) mindestens eine Trägerkappe (8, 9, 11) umfasst, die einerseits ein Bodenelement (8), das den Austauscher (6, 7) in Höhenrichtung über eine vorherbestimmte Abdeckstrecke, die mindestens gleich der Hälfte der minimalen Höhe ist, bedeckt, und andererseits einen Deckel (9, 11), der mit dem Element (8) an einer Verbindungsfläche (10, 11) entlang zusammengefügt ist, die mit dem Außenrand des Austauschers (6, 7) zusammenwirkt und den Austauscher (6, 7) in Höhenrichtung über eine Strecke, die gleich dem Unterschied zwischen der variablen Höhe (D, d) und der Abdeckstrecke ist, abdeckt, aufweist.

2. Vorrichtung zur Heizung, Lüftung und/oder Klimatisierung des Fahrgastraums eines Fahrzeugs nach Anspruch 1, **dadurch gekennzeichnet, dass** sie einen länglich geformten oberen Halter (5) umfasst, der dazu gedacht ist, im Fahrgastraum quer befestigt zu werden.

3. Vorrichtung zur Heizung, Lüftung und/oder Klimatisierung des Fahrgastraums eines Fahrzeugs nach Anspruch 2, **dadurch gekennzeichnet, dass** das Bodenelement (8) mit dem Halter (5) fest verbunden ist.

4. Vorrichtung zur Heizung, Lüftung und/oder Klimatisierung des Fahrgastraums eines Fahrzeugs nach einem der Ansprüche 2 oder 3, **dadurch gekennzeichnet, dass** der Halter (5) ein hohler Träger ist, der teilweise die Leitungen definiert und dazu gedacht ist, die aus dem Gehäuse (1) kommende Luft zu mindestens einem Bereich des Fahrgastraums zu leiten.

5. Vorrichtung zur Heizung, Lüftung und/oder Klimatisierung des Fahrgastraums eines Fahrzeugs nach einem der Ansprüche 2 oder 4, **dadurch gekennzeichnet, dass** der Halter ein hohler Träger ist, der teilweise die Leitungen definiert und mindestens eine Klappe umfasst, die dazu gedacht ist, die Verteilung der Luft im Fahrgastraum zu steuern.

6. Vorrichtung zur Heizung, Lüftung und/oder Klimatisierung des Fahrgastraums eines Fahrzeugs nach einem der Ansprüche 1 bis 5, **dadurch gekennzeichnet, dass** der Austauscher (6, 7) ein Verdampfer (6) ist, der im Wesentlichen in dem vorderen Teil (2) des Gehäuses (1) angeordnet ist und dessen Neigung (α1), gemessen durch den Winkel, der von der geneigten Ebene und der waagerechten Ebene, die durch den vorderen Rand des Verdampfers (6) geht, gebildet wird, und im herkömmlichen Sinne gezählt positiv ist.

7. Vorrichtung zur Heizung, Lüftung und/oder Klimatisierung des Fahrgastraums eines Fahrzeugs nach Anspruch 6, **dadurch gekennzeichnet, dass** sie zudem mit dem Verdampfer (6) verknüpft einen Filter (14) umfasst, dessen vorderer Rand auf dem Deckel (9) aufliegt.

8. Vorrichtung zur Heizung, Lüftung und/oder Klimatisierung des Fahrgastraums eines Fahrzeugs nach einem der Ansprüche 1 bis 7, **dadurch gekennzeichnet, dass** der Deckel (9) zudem eine Vorrichtung zum Ablassen der Kondensate (19) umfasst.

9. Vorrichtung zur Heizung, Lüftung und/oder Klimatisierung des Fahrgastraums eines Fahrzeugs nach einem der vorhergehenden Ansprüche 6 bis 8, **dadurch gekennzeichnet, dass** der Austauscher im Wesentlichen die Form eines Quaders aufweist, der sich in einer geneigten Ebene auf der Waagerechten erstreckt, und zwar der Breite nach in einer Richtung, die zur Längsachse des Halters (1) im Wesentlichen parallel ist, und der Höhe nach in einer Richtung, die zu der Längsachse im Wesentlichen rechtwinklig ist, wobei die vorherbestimmte Breite zwischen 190 mm und 350 mm liegt und die Neigung (α1) zwischen 40 und 90 Grad liegt, und dass die minimale Höhe bevorzugt mindestens gleich 200 mm ist und die maximale Höhe bevorzugt höchstens gleich 275 mm ist.

10. Vorrichtung zur Heizung, Lüftung und/oder Klimatisierung des Fahrgastraums eines Fahrzeugs nach einem der Ansprüche 2 bis 5, **dadurch gekennzeichnet, dass** der Austauscher (6, 7) ein Heizkörper (7) ist, der im Wesentlichen in dem hinteren Teil (3) des Gehäuses angeordnet ist und dessen Neigung (α2), gemessen durch den Winkel, der von der geneigten Ebene und der waagerechten Ebene, die durch den vorderen Rand des Heizkörpers (7) geht, gebildet wird, und im herkömmlichen Sinne gezählt negativ oder gleich Null ist.

11. Vorrichtung zur Heizung, Lüftung und/oder Klimatisierung des Fahrgastraums eines Fahrzeugs nach Anspruch 10, **dadurch gekennzeichnet, dass** die vorherbestimmte Breite zwischen 190 mm und 350 mm liegt und der Neigungswinkel (α2) zwischen 0 und 45 Grad liegt, und dass die minimale Höhe bevorzugt mindestens gleich 140 mm ist und die maximale Höhe bevorzugt höchstens gleich 250 mm ist.

12. Vorrichtung zur Heizung, Lüftung und/oder Klimatisierung des Fahrgastraums eines Fahrzeugs nach einem der Ansprüche 1 bis 11, **dadurch gekennzeichnet, dass** der Deckel (11) alternativ entweder einen dichten Verschluss oder Luftverteilerdüsen (13), deren seitlicher Platzbedarf Y bevorzugt im Wesentlichen zwischen der vorherbestimmten Breite und 1/3 dieses Wertes liegt, umfasst.

13. Vorrichtung zur Heizung, Lüftung und/oder Klimatisierung des Fahrgastraums eines Fahrzeugs nach einem der Ansprüche 1 bis 12, **dadurch gekennzeichnet, dass** das Gehäuse (1) bevorzugt eine Breite L, die im Wesentlichen zwischen 190 mm und 350 mm liegt, eine Höhe H, die im Wesentlichen zwischen 130 mm und 300 mm liegt, und eine Tiefe P von vorne nach hinten, die im Wesentlichen zwischen 170 mm und 490 mm liegt, aufweist.
